Europäisches Patentamt

European Patent Office

Office européen des brevets

(11) Publication number: **0 166 618**
**A1**

# EUROPEAN PATENT APPLICATION

(21) Application number: **85304607.6**

(22) Date of filing: **27.06.85**

(51) Int. Cl.⁴: **B 65 G 15/10**

(30) Priority: **29.06.84 GB 8416583**

(43) Date of publication of application: **02.01.86**
Bulletin 86/1

(84) Designated Contracting States: **AT BE CH DE FR GB IT LI LU NL SE**

(71) Applicant: **Gough & Company (Hanley) Limited, Clough Street, Hanley, Stoke on Trent, Staffordshire (GB)**

(72) Inventor: **Gough, George Terah, 1 Dale Close Baldwins Gate, Newcastle Staffs. ST5 5DN (GB)**

(74) Representative: **Carpmael, John William Maurice et al, CARPMAELS & RANSFORD 43 Bloomsbury Square, London, WC1A 2RA (GB)**

(54) **Elevating conveyor.**

(57)   An elevating conveyor for powder, granular or like material provided with a loading section (143) and a discharge zone (153) joined by an upwardly inclined or vertical elevating section (147), wherein an endless conveyor belt (117) entrained around support drums (129, 131, 133, 135, 137) extends at least from the base of the elevating section (147) to the discharge zone (153) and co-operates in the elevating section (147) at least with a further conveyor part, preferably a fixed plate (171) to define a closed space (281) in which material is elevated by upward movement of the belt (117), the elevating section (147) being mounted for pivotal movement about the rotational axis of a lower support drum (129) for the belt (117) to enable the height of discharge and angle of inclination of the elevating section (147) to be altered.
   Preferably the conveyor is mounted on wheels (5), the belt (117) has flexible side walls (3, 5) and transverse flight bars (not shown) between the side walls, friction reducing material (71a and 272) to help prevent friction and wear between the plate (171) and side walls (3, 5), and a loading belt (115 or 15) is also provided. The conveyor may be generally L-, C- or Z-shaped.

-1-

## ELEVATING CONVEYOR

This invention relates to an elevating conveyor for granular, powdered or like material. The conveyor would, for example, be suitable for handling granular materials such as sugar or grain, or a powdered material such as cement or flour, or a material such as sand or a sand/gravel mixture, or coal which could be at least partially crushed. Furthermore, the conveyor could have many uses in the food, chemical and other industries.

It is well known to convey materials such as those described above from a first location to a second location which may be vertically spaced or indeed substantially vertically above the first location by confining the material between two endless belt runs which are moving in the same direction and at the same speed, or between one run of an endless belt and a fixed plate or casing. The belt or belts may have many different constructions and can either be supported so as to have a generally dished configuration when viewed in cross-section (see U.K. Patent No.1513992 or U.K. Patent No.944102) or alternatively, at least one of the belts may be provided with upstanding side walls so as to confine material supported by the belt and at least substantially prevent spillage of the material over the side edges of the belt (see U.K.Patent No.969429 and German DAS 1120978). The belt itself may be formed of a resiliently deformable rubber or plastics material and the surface of the belt on which the material to be conveyed is supported may be plain and smooth such as, for example, as disclosed in the German DAS 1120978 or it may be provided with transverse ribs such as are disclosed in the said U.K. Patent Nos. 969429 and 944102. These transverse ribs may take different forms but instead of providing ribs, the belt may have a working face which is provided with a pattern of spaced and staggered projecting

-2-

nubs such as are disclosed in U.S. Patent No.3561907. In German Specification OLS 2717100, two co-operating belts are disclosed, the lower one of which is supported on suitable guide rollers so as to give it a generally dish-shaped cross-section and the upper one of which has longitudinally extending side wall portions extending from the belt surface and transverse bars projecting from the belt surface. This belt is capable of conveying materials vertically.

A somewhat similar conveyor is disclosed in German OLS 2631643 and a yet further construction which relies upon a reduced pressure between the belts to hold the belts together is disclosed in German OLS 2418156.

Rubber and PVC belting is now well known and is commercially available with different cross-sectional shapes. It is now quite common to provide lateral spilledges on PVC belting and these spilledges can merely be upstanding flanges which can have a rectangular, square, round, generally V-shaped or any other required profile. Furthermore, these edges may have a generally corrugated construction when viewed in plan so that the belts can withstand flexing over conveyor pulleys or drums of small diameter. Several different designs of such corrugated side walled belts are marketed by Hartmann Bandgessellschaft mbH under their trade mark HARBAWELL.

What is more, if desired, projecting ribs can also or alternatively be provided on a lower side of the belt and typically these may have a V-shaped profile to assist with the tracking, i.e. guidance of the belt.

We have now devised an elevating conveyor which is particularly suitable for use as a mobile conveyor and incorporates at least one and preferably a pair of endless belts, one of which has a special cross-section which can be used to transfer material from one location to another, which locations may be vertically spaced, at high speed and which is suitable for even the most abrasive of materials and has very few moving parts except for support rollers, pressure rollers and change direction drums for the or each belt.

A problem with most, if not all, of the conveyors disclosed above, and similar conveyors of the twin belt type, is that they can only be operated at relatively low speeds and low angles of delivery. This is because they tend not to track satisfactorily because both belts tend to be entrained in superimposed relationship around the same support drums over the majority of the conveyor length. This means that, because the two belts will thus be moving through different radii of curvature, they in fact move at different speeds over the drums; in the case of movement over a drum in one direction, belt A may be moving faster than belt B, but in the case of movement of a drum in the opposite direction, i.e. change of direction, belt B may be moving faster than belt A. However, the belts should always be in contact with each other to prevent material spillage, and this means therefore that there must be continuous relative belt movement. This can cause rapid belt wear due to friction, and means that such conveyors cannot be operated at high speeds.

The present invention seeks to overcome the problem mentioned above and to provide a conveyor that enables vertical and low angle of distribution of the materials based upon the angle of repose of the particles within the confine of the conveying chamber, which can be formed by two co-operating belts and/or by one belt co-operating with a fixed member.

According to the present invention, we provide an elevating conveyor comprising a loading section and an elevating section leading to a discharge zone, and wherein an endless conveyor

-4-

belt is provided to convey material from the loading section to the discharge zone, said belt, over the elevating section at least, co-operating with a further conveyor part to form a closed space for said material, and wherein the elevating section of the conveyor is pivotable about the rotational axis of a belt support drum at the bottom of the elevating section so that the height of the discharge zone and inclination of the elevating section can be altered.

The conveyor may be of generally C-shape, L- or Z-shape, and hence the discharge zone may be on the same side of the elevating section as the loading section, or on the opposite side.

Preferably, in the elevating section, the further conveyor part comprises a fixed plate extending from the said drum and around a top drum for the belt to the discharge zone.

In one construction of C-shaped conveyor, in the loading section, an endless loading belt is provided which has a genrally horizontal run extending from beneath a feed device and co-operates with said first mentioned endless conveyor belt at least where it extends round said drum at the bottom of the elevating section, where material on its conveying surface is transferred into a space between the fixed plate and the first belt.

Preferably, a support drum for the loading belt is supported on a swing arm which pivots with the elevating section so as to ensure continuity between the loading belt and the lower end of the fixed plate, and a further support drum for said loading belt is slidably supported to permit such pivoting.

In an alternative construction, in which the conveyor is generally Z-shaped, an endless loading belt is provided at the lower end of the elevating section, to assist with transfer of material from the loading section to the elevating section, the loading belt extending a short distance up the elevating section to co-operate with a lower end of the fixed plate.

Preferably, an upper support drum for the loading belt is supported on a sprung arm so as to maintain pressure between the two endless belts when the elevating section is pivotted to various positions.

Preferably, the conveyor is supported on a wheeled main frame fitted with a tow bar, with the elevating section being supported on an articulating frame pivotably supported on the main frame.

Preferably, means is provided between the endless belt in the elevating section and the fixed plate to reduce wear due to friction.

Preferably, the belt comprises a load-carrying portion and two side wall portions which are bonded to side edge regions of the load-carrying portion, all being formed of flexible material.

The side wall portions may be bonded or otherwise secured to upper lateral surface regions of a belting strip providing the load carrying portion.

The means to reduce wear on the side wall portions may comprise a strip or layer of TEFLON or the like provided on the fixed plate where it co-operates with the side wall portions of the belt.

Preferably, the fixed plate is part of a casing within which the endless conveyor belt slides in the elevating section. Alternatively, it could be a separate plate mounted within a casing (which is lined with friction reducing material) and biassed, e.g. by springs, rollers or air tubes, against the side walls of the belt.

Preferably, the casing is pivotted about a horizontal axis corresponding with that of the lower pulley for the belt.

At the top of the elevating section the belt is preferably entrained around a support drum, and material thereon is preferably guided around this drum for discharge by a curved upper portion of the plate.

If desired, at its upper end, the belt may pass around two pulleys, with the uppermost pulley overlying the loading station, thus giving the conveyor a generally C-shape.

Several embodiments of elevating conveyor in accordance with the present invention are now described by way of example with reference to the accompanying drawings, in which:-

FIGURE 1 is a partly schematic side elevation of a first embodiment of elevating conveyor incorporating a lower loading belt;

FIGURE 2 is a horizontal section on the line II-II of Figure 1;

FIGURE 3 is a view similar to Figure 2 of an alternative construction;

FIGURE 4 is a view similar to Figure 1 of an alternative embodiment of the invention, and

FIGURE 5 is a scrap view, similar to part of Figure 4, showing a yet further embodiment of the invention.

In the various views of the drawings, like parts are identified by the same reference numerals.

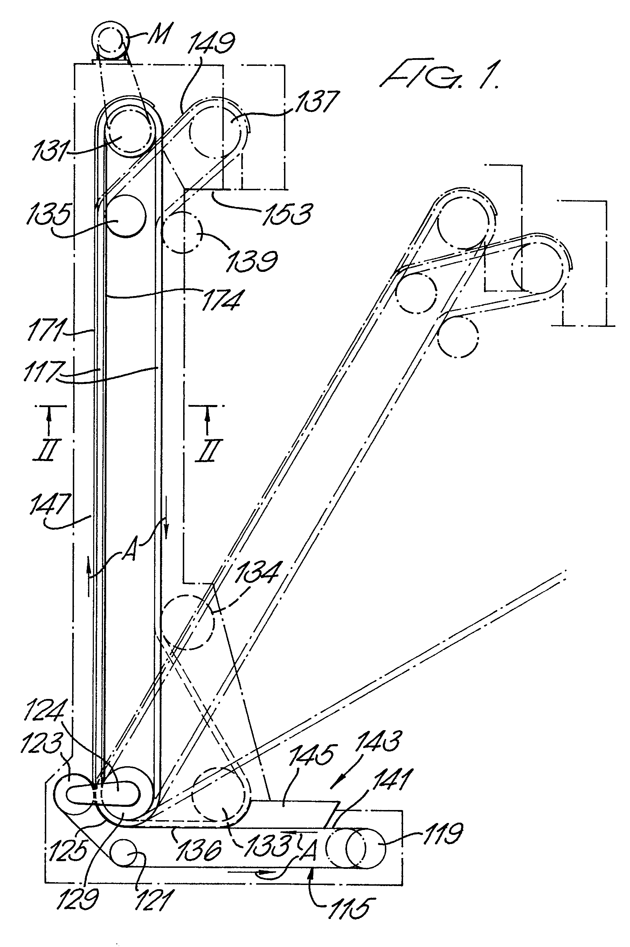

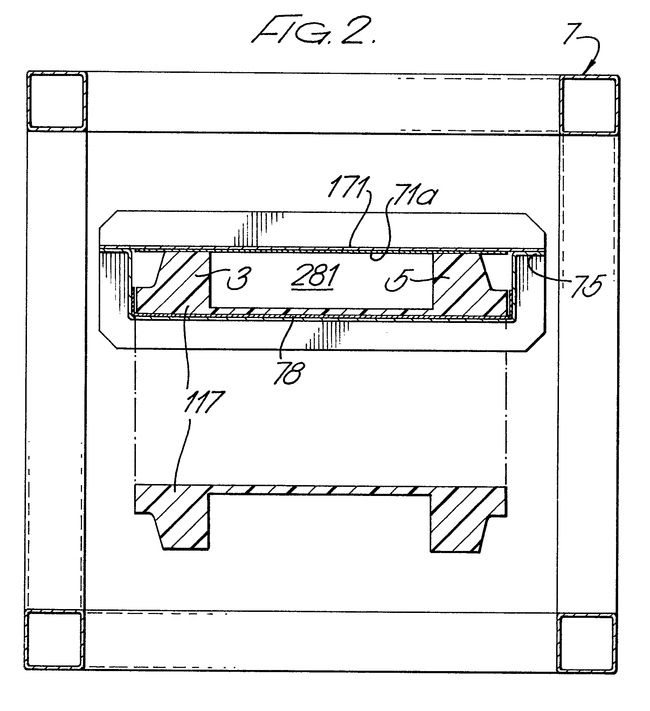

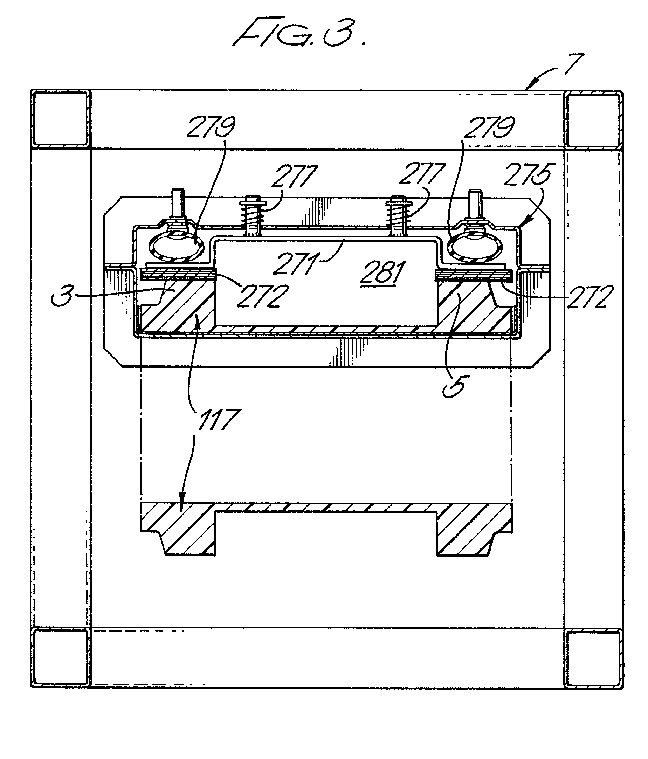

Referring to Figure 1, the elevating conveyor shown therein incorporates two endless belts 115 and 117, each of a different construction. Belt 115 is a flat belt and is entrained around three support drums 119, 121 and 123, and at 25 is supported by the belt 117 where that belt is entrained around a special pulley or drum 129. The belt 117 is provided with two upstanding side walls 3, 5 as shown in Figures 2 and 3 and is also entrained around a further special drum 131 and/or optionally, further drums 133, 134, 135, 137 and 139.

The precise construction of the belt 117 forms no part of this invention, and may take many

-7-

different forms from that illustrated. For example, the side walls may be of a different construction, e.g. corrugated.

The bottom of drum 129 and top of drum 119 are preferably arranged at the same level so that an upper run 141 of the belt 115 extends generally horizontally so as to form part of a loading station 143 provided with a feed chute 145. The feed chute 145 is specially shaped for sealing engagement with the run 141 of the belt 115 and so as to form a seal with the curved portion of belt 117 when it is entrained around the drum 133 (when provided). (If not, it would be extended to form a seal with the belt 117 when it is entrained around the drum 129).

The drums 129 and 131 (or 129 and 135) are so arranged that the belt 117 has a generally vertical elevating run 147 (the elevating section) which may optionally be followed by an inclined run 149 if drums 135 and 137 are provided, thus giving the conveyor a C-shape, instead of drum 131. The belts 115, 117 are driven in the direction of arrows A by a motor M, and depending on the construction of the conveyor material elevated by the belt 117 is discharged over the drum 131 or drum 137 at a discharge station 153.

As can be appreciated from Figure 1, the drums 134 and 139 will have a special cross-section to receive the side-walled belt 117. If this has a tracking rib on its rear face, then drums 129, 131, 133 and 137 will have to have a groove in their surface to receive the rib. The drums 119, 121 and 123 are plain, to receive the belt 115 and hold it in position, although again there may be a suitable groove in the surface of these drums to receive a tracking rib.

The run 147 of the belt 117 in the elevating section co-operates with a fixed plate 171 (see Figure 2) which may be provided with slider strips 272 (see Figure 3) against which the upper faces of side walls 3 and 5 of the belt 117 run, but which preferably has a friction reducing (e.g. P.T.F.E.) surface layer 71a. The fixed plate 171 preferably forms one wall of a generally rectangular casing or tube 75 through which the belt 117 runs so as totally to encompass the elevating section of the conveyor, the other wall also having a friction reducing coating 78. Alternatively, as shown in Figure 3, the plate may be trough shaped as shown at 271 and be slidably supported on a wall of a casing 275 (as shown) and the belt 117 and plate 271 are biassed into engagement with one another so as to prevent spillage of material being conveyed through a closed space 281 in the elevating section over the side edges of the belt side walls 3 and 5. This bias may be provided by springs, rollers or inflatable tubes 279 with springs 277 biassing the plate 271 and belt 117 apart. The tubes 279, springs or rollers thus cause the side walls 3 and 5 of the belt to be pressed against the slider strips 272 on the plate 271. As can be seen from Figure 3, the plate 271 is of shallow U-shaped cross-section so as to define with the belt 117 a conveying channel 281 running totally with the casing 275. This plate could, however, be flat or concave or convex or not included at all for some materials, and the casing 275 itself could co-operate with the belt 117.

As can be seen in Figure 1, the plate 171 is curved at its upper end so as to follow the general contour of the belt on the pulley 131 (or 137) so as to guide material on the belt 117 up and around the drum 131 (or up the inclined run between the drum 135 and the drum 137) so that it can be discharged at 153.

The belt 117 at the bottom of the elevating section 147 can either just pass over drum 129, or be entrained around the further drums 133 and 134 to give a generally horizontal belt run 136 co-operating with run 141. This provides a lead-in channel to the elevating section 147 for materials which is an advantage if they have a small angle of repose and elevating means, e.g. ribs or nubs are not provided on the surface of the belt 117.

As can be seen from Figure 1, the whole
of the elevating section of the conveyor, including
the plate 171 (and tube 75 if provided), and drum
131 (and also drums 135, 137 and 139 if provided)
and discharge station 153, can be pivotted about a
horizontal axis corresponding to the rotational axis
of the drum 129.  To ensure that a gap does not open
up between the belt 115 and plate 171 when the elevating
section is swung to its broken line position, the
drum 123 for the belt 115 is mounted on a support
arm 124 which follows the swinging movement of the
elevating section 147 (about axis of drum 129).  To
permit this movement of the drum 123 it is necessary
for the drum 119 for the belt 115 to be slidably mounted,
e.g. under the bias of a spring, between its full
and dot-dash line positions in Figure 1.   This means
that the conveyor can discharge at different heights
and lateral locations which has obvious advantages.
Also, it means that different materials can be conveyed
within the elevating section at different angles,
dependent upon the angle of repose of the material.
Furthermore, the pivotting elevating section has
particular advantages since it means the whole conveyor
can be made portable, e.g. mounted on wheels or a
trailer chassis.

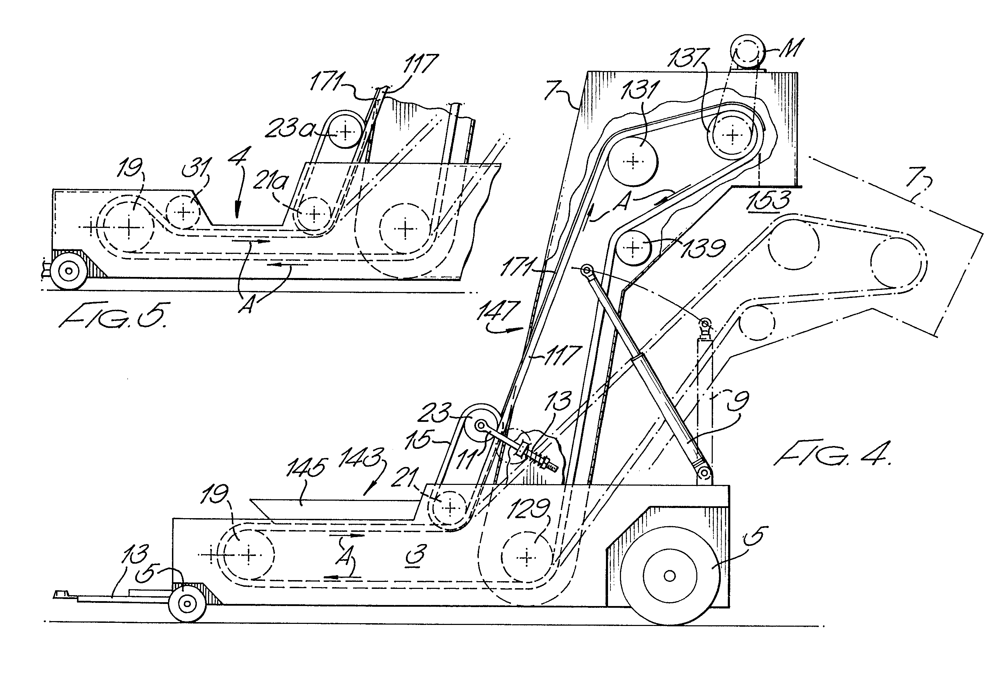

Referring now to the construction shown
in Figure 4, a main belt 117 is entrained in a generally
Z-shape about drum 19, a loading belt 15 on drums
21 and 23, and drums 131, 137, 139 and 129 so as to
have a generally horizontal loading section 143, an
upwardly extending elevating section 147 and a discharge
zone 153.   The drums 19 and 129 are rotatably mounted
on a main frame 3 provided with wheels 5 and a tow
bar 13 on which an articulating frame 7 is pivotably
mounted about the rotational axis of drum 129.  Each
of drums 131, 137, 139 is supported by frame 7, articulation of which is controlled by an extendable strut
9 extending between frames 3 and 7.  The drum 23 is

-10-

supported on one end of an arm 11, the other end of which is pivotably supported on the frame 7, the arm being telescopic with the drum 23 always biassed by a spring 13 to ensure the load belt 15 is held against the main belt 117 as the frame 7 articulates.

As in the embodiment of Figure 1, a feed hopper 145 is provided at the feed station 143, and two alternative positions of the conveyor are shown in full and broken lines, respectively.

In the further alternative low feed construction shown in Figure 5, the load station is at a low level, and the main belt 117 is entrained beneath an extra drum 31, and the locations of drums 21$\underline{a}$ and 23$\underline{a}$ are lower than those of drums 21 and 23. Furthermore, the main frame 3 has a dished portion 4 which is designed to accommodate a feed hopper (not shown).

In both the constructions shown in Figures 4 and 5, the main belt 117 immediately above the load belt 14 co-operates with a fixed plate 171 in exactly the same way as shown in Figure 2 or Figure 3. However, with all the embodiments it is envisaged that the fixed plate 171 could be replaced by an alternative co-operating conveyor part, such as a further endless belt, or even an extension of the belt 15 or the belt 115.

The belt 117, which moves in the direction of arrows A, preferably has upstanding transverse spaced ribs thereon, or a plurality of upstanding nubs, between the side walls 3, 5, but this is not essential. Furthermore, the side walls may have a generally corrugated configuration. All powdered, granular or like materials when stock-piled have their own angle of repose and the conveyors of the present invention will oeprate satisfactorily and convey material vertically through space 281 without the provision of transverse ribs or upstanding nubs because at the loading stations 143 the material being conveyed and which is supported on the horizontal run 141 of the belt 117 will find its own angle of repose; the resultant frictional

-11-

forces generated within the material in this horizontal run 141 will be sufficient to support a column of the same material in the space 281 in the vertical run 147 of the conveyors. Such properties are well known and are clearly relied upon for a satisfactory operation of many of the already known conveyors the subject of the prior specifications listed herein.

It will of course be appreciated that drive to the conveyor belts (from motor M), belt tensioning and other precise details of the component parts and the manner in which most of the various component parts of the conveyors are supported in their framework form no part of the present invention and accordingly these parts of the conveyors have not been described in detail.

It will of course be understood that the present invention has been described above purely by way of example, and modifications of detail can be made within the scope and spirit of the invention.

0166618

-12-

<u>CLAIMS:</u>

1. An elevating conveyor comprising a loading section (143) and an elevating section (147) leading to a discharge zone (153) and wherein an endless conveyor belt (117) is provided to convey material from the loading section (143) to the discharge zone (153), characterised in that over the elevating section (147) at least, said belt (117) co-operates with a further conveyor part (171 and/or 115 or 15) to form a closed space (281) for said material, and in that the elevating section (147) is pivotable about the rotational axis of a belt support drum (129) at the bottom of the elevating section (147) so that the height of the discharge zone (153) and inclination of the elevating section (147) can be altered.

2. An elevating conveyor according to claim 1 characterised in that said further conveyor part comprises a fixed plate (171) extending from said drum (129) and around a top support drum (131 or 137) for the belt (117) to the discharge zone (153).

3. An elevating conveyor according to claim 1 or 2 characterised in that in the loading section (143) an endless loading belt (115) is provided which has a generally horizontal run extending from beneath a feed device (145) and which co-operates with the belt (117) at least where it extends round said drum (129) at the bottom of the elevating section (147), where material passing from the device (145) onto the horizontal run of the belt (115) is transferred into a space (281) between the belt (117) and the further conveyor part (171).

4. A conveyor according to claim 3 characterised in that a support drum (123) for the loading belt (115) is supported on a swing arm (124) which pivots with the elevating section (147), a further support drum (119) for said loading belt (115) being slidably supported to permit such pivotting.

5.       A conveyor according to claim 2 characterised in that an endless loading belt (15) is provided at the lower end of the elevating section (147) and extends a short distance up the elevating section to co-operate with a lower end of the fixed plate (171), and wherein an upper support drum (23) for the loading belt (15) is supported on a spring arm to maintain pressure between the loading belt (15) and main belt (117) at all times.

6.       A conveyor according to any one of claims 1-5 characterised in that it is supported on a main frame (3) provided with wheels (5) and a tow bar (13), with the elevating section (147) being carried by an articulating frame (7) pivotably supported on the main frame (3).

7.       A conveyor according to any one of the preceding claims characterised in that friction reducing means (71a or 272) is provided between the endless belt (117) and the further conveyor part (171) in the elevating section (147).

8.       A conveyor according to any one of the preceding claims characterised in that the belt (117) has upstanding side walls (3,5).

9.       A conveyor according to claim 2 or any one of claims 3-8 when dependent on claim 2 wherein the fixed plate (171) forms part of a casing (75) in which the belt (117) slides in the elevating section (147), the casing being lined with friction reducing material (71a and 78).

10.       A conveyor according to any one of the preceding claims characterised in that the or each belt (117, 15 or 115) is/are entrained around appropriate support drums (119-135 or 19-23) such that it has a generally L-, C- or Z-shape.

FIG. 1.

FIG. 2.

FIG. 3.

0166618

FIG. 4.

FIG. 5.

## EUROPEAN SEARCH REPORT

| DOCUMENTS CONSIDERED TO BE RELEVANT | | | EP 85304607.6 |

| Category | Citation of document with indication. where appropriate, of relevant passages | Relevant to claim | CLASSIFICATION OF THE APPLICATION (Int Cl 4) |
|---|---|---|---|
| X | GB - A - 2 122 158 (NATIONAL RESEARCH DEVELOPMENT)<br>* Fig. 1; page 1, line 127 - page 2, line 2 * | 1 | B 65 G 15/10 |
| D,A | GB - A - 1 513 992 (ALLIS-CHALMERS)<br>* Fig. 5 * | 1 | |

**TECHNICAL FIELDS SEARCHED (Int Cl 4)**

B 65 G

The present search report has been drawn up for all claims

| Place of search | Date of completion of the search | Examiner |
|---|---|---|
| VIENNA | 17-09-1985 | BAUMGARTNER |